# EUROPEAN PATENT APPLICATION

(11) **EP 4 761 280 A1**
(43) Date of publication of application: **17.06.2026**
(21) Application number: 25199317.6
(22) Date of filing: 01.09.2025
(51) Int. Cl.: H04R 3/00, G06F 3/16, H04R 3/12, G10L 15/22

(54) **DATA PROCESSING METHOD, APPARATUS, AND DEVICE, COMPUTER PROGRAM PRODUCT, AND STORAGE MEDIUM**

(30) Priority: 04.09.2024 CN 202411239994
(71) Applicant: Harman International Industries, Incorporated, Stamford, CT 06901 (US)
(72) Inventor: TANG, Chuanlong, Shenzhen, 518057 (CN); XUE, Baihui, Shenzhen, 518057 (CN); WAN, Yulin, Shenzhen, 518057 (CN); SUO, Suma, Shenzhen, 518057 (CN); DOU, Yudong, Shenzhen, 518057 (CN); YE, Wei, Shenzhen, 518057 (CN)
(74) Representative: Rummler, Felix

(57) **Abstract**

A data processing method, apparatus, and device, a computer program product, and a computerreadable storage medium are provided. With the method, microphone data is shared between a plurality of speakers by using a data connection between the plurality of speakers, to determine an awakened AI speaker of the plurality of speakers based on the shared microphone data, then AI audio data is generated for the captured microphone data by using an AI functional module in the awakened AI speaker, and the generated AI audio data is shared to at least part of the plurality of speakers, thereby implementing sharing of an AI speaker functionality between a plurality of speaker devices. By implementing sharing of an AI speaker functionality between the plurality of speaker devices, each speaker is enabled to support more AI functionalities than its original configuration, and even a speaker configured with no any AI functionality can still support all AI functionalities of all of the plurality of speakers.

## Description

### Technical Field

The present disclosure relates to the field of data processing, and more particularly, to a data processing method, apparatus, and device, a computer program product, and a storage medium.

### Background

In the present digital era, artificial intelligence (AI) speakers serving as an important constituent part of smart home are changing people's ways of life constantly. The AI speakers, also referred to as intelligent speakers, are a class of devices which provide users with interactive and hands-free experience by using the artificial intelligence technology and speech recognition technology. They have been significantly popularized and have become one of the core devices for many homes. The AI speakers are generally equipped with virtual assistants, and these virtual assistants understand and respond to user commands through natural language processing (NLP) and machine learning algorithms. Such a speech-based interaction mode enables users to communicate with the devices in a more natural and convenient way, stimulating people's interest and demand for smart home. For example, through pure speech instructions, users can ask the speakers to play specific music, provide weather forecasts, set alarm clocks, even control smart home devices (such as lights and temperature controllers), etc.

With the popularization of AI speakers, various products of different brands and models have emerged in the market. Many companies and platforms offer APIs and services that developers can integrate into their applications to take advantage of these AI audio capabilities. Accordingly, speaker manufacturers have integrated various types of audio AI services one after another to improve the functionality and competitiveness of their devices. To satisfy customized demands of users, one home may be equipped with a plurality of speakers, even with a plurality of speakers with different AI services. However, such ever-growing diversity brings many challenges.

Therefore, an efficient data processing method is required to be applied to a plurality of speakers with different AI services, thereby improving the performance of audio AI services between these speakers.

### Summary of the Invention

In order to solve the above problem, the present disclosure allows sharing of microphone data and AI data between a plurality of speaker devices through a data connection between the speaker devices, thereby implementing sharing of an AI speaker functionality between a plurality of speakers with different AI services.

Embodiments of the present disclosure provide a data processing method, apparatus, and device, a computer program product, and a computer-readable storage medium.

An embodiment of the present disclosure provides a data processing method for a plurality of speakers connected to each other, the plurality of speakers including at least one AI speaker integrated with an AI functional module and having a microphone and at least one non-AI speaker integrated with no the AI functional module and having a microphone, and the method including: capturing microphone data through the plurality of speakers, where the speaker from which the captured microphone data originates is a source speaker; determining an awakened AI speaker of the plurality of speakers based on the captured microphone data; generating AI audio data for the captured microphone data using an AI functional module in the awakened AI speaker; and playing the generated AI audio data using at least the source speaker.

According to this embodiment of the present disclosure, capturing the microphone data through the plurality of speakers includes: for each non-AI speaker of the plurality of speakers, capturing, by the non-AI speaker, local microphone data through a microphone, and sending the captured local microphone data to at least the at least one AI speaker, where the non-AI speaker is the source speaker; and for each AI speaker of the plurality of speakers, capturing, by the AI speaker, local microphone data through a microphone, and/or receiving external microphone data from another speaker of the plurality of speakers, and using the captured local microphone data and/or the received external microphone data as data to be recognized for the AI speaker.

According to this embodiment of the present disclosure, capturing the microphone data through the plurality of speakers further includes: for each AI speaker of the plurality of speakers, sending the local microphone data captured by the AI speaker through the microphone to at least another AI speaker of the at least one AI speaker, where the AI speaker is the source speaker.

According to this embodiment of the present disclosure, determining the awakened AI speaker of the plurality of speakers based on the captured microphone data includes: for each AI speaker of the plurality of speakers, determining, through speech recognition based on the data to be recognized for the AI speaker, whether the AI speaker is awakened.

According to this embodiment of the present disclosure, determining, through speech recognition based on the data to be recognized for the AI speaker, whether the AI speaker is awakened includes: determining, through speech recognition, whether there is a wake-up word corresponding to the AI speaker in the data to be recognized; and when it is determined that there is a wake-up word corresponding to the AI speaker in the data to be recognized, determining that the AI speaker is awakened.

According to this embodiment of the present disclosure, playing the generated AI audio data using at least the source speaker includes at least one of the following: when the awakened AI speaker is the source speaker, playing the generated AI audio data using the awakened AI speaker; when the awakened AI speaker is the source speaker, broadcasting, by the awakened AI speaker, the AI audio data to each of the plurality of speakers for play by each of the plurality of speakers; when the awakened AI speaker is not the source speaker, sending, by the awakened AI speaker, the generated AI audio data to the source speaker for play by the source speaker; or when the awakened AI speaker is not the source speaker, broadcasting, by the awakened AI speaker, the AI audio data to each of the plurality of speakers for play by each of the plurality of speakers.

According to this embodiment of the present disclosure, the plurality of speakers are connected to each other through a local area network.

An embodiment of the present disclosure provides another data processing method for a non-AI speaker integrated with no AI functional module and having a microphone in a speaker system, where the speaker system includes a plurality of speakers connected to each other, the plurality of speakers include at least one AI speaker integrated with an AI functional module and having a microphone and at least one non-AI speaker, the method is performed by one of the at least one non-AI speaker, and the method includes: in response to microphone data being captured by the non-AI speaker, sending the captured microphone data to at least the at least one AI speaker; receiving, from an awakened AI speaker of the at least one AI speaker, AI audio data generated by the awakened AI speaker for the captured microphone data, where the awakened AI speaker is determined based on the captured microphone data, and the AI audio data is generated using an AI functional module in the awakened AI speaker; and playing the AI audio data.

An embodiment of the present disclosure provides still another data processing method for an AI speaker integrated with an AI functional module and having a microphone in a speaker system, where the speaker system includes a plurality of speakers connected to each other, the plurality of speakers include at least one AI speaker and at least one non-AI speaker integrated with no AI functional module and having a microphone, the method is performed by one of the at least one AI speaker, and the method includes: in response to local microphone data being captured by the AI speaker, sending the captured local microphone data to at least another AI speaker of the at least one AI speaker; in response to external microphone data being captured by another speaker of the plurality of speakers, receiving the external microphone data from the another speaker; using the local microphone data and/or the external microphone data as data to be recognized for the AI speaker; determining, based on the data to be recognized, whether the AI speaker is awakened; when it is determined that the AI speaker is awakened, generating, using an AI functional module in the AI speaker, AI audio data for the data to be recognized; playing the AI audio data using the AI speaker when the local microphone data is captured by the AI speaker; and sending the AI audio data to the another speaker when the external microphone data is captured by the another speaker of the plurality of speakers.

According to this embodiment of the present disclosure, the method further includes: receiving, from an awakened AI speaker of the other AI speakers, AI audio data generated by the awakened AI speaker; and playing the received AI audio data using the AI speaker.

An embodiment of the present disclosure provides a data processing apparatus for a non-AI speaker integrated with no AI functional module and having a microphone in a speaker system, where the speaker system includes a plurality of speakers connected to each other, the plurality of speakers include at least one AI speaker integrated with an AI functional module and having a microphone and at least one non-AI speaker, and the apparatus includes one or more modules for implementing the above method for a non-AI speaker in a speaker system.

An embodiment of the present disclosure provides a data processing apparatus for an AI speaker integrated with an AI functional module and having a microphone in a speaker system, where the speaker system includes a plurality of speakers connected to each other, the plurality of speakers include at least one AI speaker and at least one non-AI speaker integrated with no AI functional module and having a microphone, and the apparatus includes one or more modules for implementing the above method for an AI speaker in a speaker system.

An embodiment of the present disclosure provides a data processing device, including: at least one processor; and at least one memory having stored therein a computer-executable program that, when executed by the processor, causes the above data processing method to be performed.

An embodiment of the present disclosure provides a computer-readable storage medium having stored thereon computer-executable instructions that, when executed by a processor, cause the above data processing method to be implemented.

An embodiment of the present disclosure provides a computer program product or computer program including computer instructions stored in a computer-readable storage medium. A processor of a computer device reads the computer instructions from the computer-readable storage medium, and the processor executes the computer instructions to cause the computer device to execute the data processing method according to the embodiments of the present disclosure.

With the method provided by the embodiments of the present disclosure, microphone data is shared between a plurality of speakers by using a data connection between the plurality of speakers, to determine an awakened AI speaker of the plurality of speakers based on the shared microphone data, then AI audio data is generated for the captured microphone data by using an AI functional module in the awakened AI speaker, and the generated AI audio data is shared to at least part of the plurality of speakers, thereby implementing sharing of an AI speaker functionality between a plurality of speaker devices. With the method of the embodiments of the present disclosure, by implementing sharing of an AI speaker functionality between the plurality of speaker devices, each speaker is enabled to support more AI functionalities than its original configuration, and even a speaker configured with no any AI functionality can still support all AI functionalities of all of the plurality of speakers.

### Brief Description of the Drawings

In order to more clearly illustrate the technical solutions of the embodiments of the present disclosure, the drawings required for describing the embodiments are briefly introduced below. Apparently, the drawings described below are merely some example embodiments of the present disclosure, and other drawings can further be obtained according to these drawings by those of ordinary skill in the art without creative effort.
FIG. 1 is a schematic diagram illustrating a scenario of a plurality of speakers in a home scenario according to an embodiment of the present disclosure;
FIG. 2 is a flowchart illustrating a data processing method according to an embodiment of the present disclosure;
FIG. 3 is a schematic diagram illustrating data sharing between a plurality of speakers according to an embodiment of the present disclosure;
FIG. 4 is a schematic diagram illustrating data sharing between a non-AI speaker and an AI speaker according to an embodiment of the present disclosure;
FIG. 5 is a schematic diagram illustrating data sharing between AI speakers according to an embodiment of the present disclosure;
FIG. 6 is a schematic flowchart illustrating a data processing method according to an embodiment of the present disclosure;
FIG. 7 is a flowchart illustrating a data processing method according to an embodiment of the present disclosure;
FIG. 8 is a flowchart illustrating a data processing method according to an embodiment of the present disclosure;
FIG. 9 illustrates a schematic diagram of a data processing device according to an embodiment of the present disclosure; and
FIG. 10 illustrates a schematic diagram of an architecture of an example computing device according to an embodiment of the present disclosure.

### Detailed Description

In order to make the objectives, technical solutions, and advantages of the present disclosure more obvious, example embodiments according to the present disclosure will be described in detail below with reference to the drawings. Apparently, the described embodiments are merely some of the embodiments of the present disclosure, rather than all the embodiments of the present disclosure. It should be understood that the present disclosure is not limited by the example embodiments described herein.

In this specification and the drawings, substantially the same or similar steps and elements are denoted by the same or similar reference numerals, and duplicated description of these steps and elements will be omitted. Meanwhile, in the description of the present disclosure, terms "first", "second", and the like are used only for distinguishing description and cannot be understood as indicating or implying relative importance or ordering.

In the embodiments of the present disclosure, the term "module" or "unit" refers to a computer program or a segment of a computer program that has a predetermined function and works together with other related parts to achieve a predetermined goal, and can be implemented entirely or in part by using software, hardware (such as a processing circuit or memory), or a combination thereof. Likewise, one processor (or a plurality of processors or memories) can be used for implementing at least one module or unit. Further, each module or unit may be a part of an integral module or unit that includes the function of the module or unit.

Unless otherwise defined, all technical and scientific terms used herein have the same meanings as commonly understood by those skilled in the technical field to which the present disclosure belongs. The terms used herein are for the purpose of describing embodiments of the present invention only and are not intended to limit the present invention.

With the development of artificial intelligence (AI) technology, AI speakers have become an important constituent part of modern home life. These intelligent devices provide users with various functionalities such as convenient information query, intelligent home control, and entertainment services through technologies such as speech recognition and natural language processing. However, with the ever-growing customized demands of users, AI speakers of a single type usually cannot satisfy the diversified demands of a home. In this context, more and more homes start considering the configuration of a plurality of speakers with different AI services, in expectation to take full advantage of different AI technologies and applications.

However, the purchase of a plurality of AI speakers of different brands and functionalities undoubtedly leads to a significant increase in hardware expense of the home, particularly in a case where repeat purchase of AI speakers of the same brand and functionality is required for different usage scenarios. This is not an ideal choice for users with limited budgets. Moreover, in addition to space occupation, placing too many speakers in the same area may also cause inter-device interference, thereby reducing the accuracy and response speed of speech recognition.

To handle the above problems, integrating software development kits (SDKs) of a plurality of AI services into the same speaker seems like a reasonable solution. However, the solution is confronted by many challenges during its implementation. First, from the perspective of hardware, the significant increase in memory and flash spaces required to integrate various AI services means that manufacturers need to devote more resources to the design and production of these high-performance devices. Secondly, the complexity of software development and testing also increases accordingly. Integrating different SDKs requires complex compatibility testing and performance evaluation to ensure normal operation of all functionalities. This undoubtedly increases the workload of research and development team, thereby prolonging a product launch cycle and increasing the difficulty in market competition.

For the above problems, the data processing method of the present disclosure proposes a data connection-based solution, which can effectively reduce the number and cost of devices by enabling sharing of an AI functionality between a plurality of speakers. In the data processing method of the present disclosure, a speaker integrated with no AI SDK can access an AI functionality of another speaker through a data connection, thereby extending applications such as intelligent control and a voice assistant. Meanwhile, data sharing can integrate a plurality of functionalities of speakers each integrated with a specific AI SDK in the same network, greatly improving the flexibility and convenience of use.

Specifically, with the method provided by the embodiments of the present disclosure, microphone data is shared between a plurality of speakers by using a data connection between the plurality of speakers, to determine an awakened AI speaker of the plurality of speakers based on the shared microphone data, then AI audio data is generated for the captured microphone data by using an AI functional module in the awakened AI speaker, and the generated AI audio data is shared to at least part of the plurality of speakers, thereby implementing sharing of an AI speaker functionality between a plurality of speaker devices. With the method of the embodiments of the present disclosure, by implementing sharing of an AI speaker functionality between the plurality of speaker devices, each speaker is enabled to support more AI functionalities than its original configuration, and even a speaker configured with no any AI functionality can still support all AI functionalities of all of the plurality of speakers.

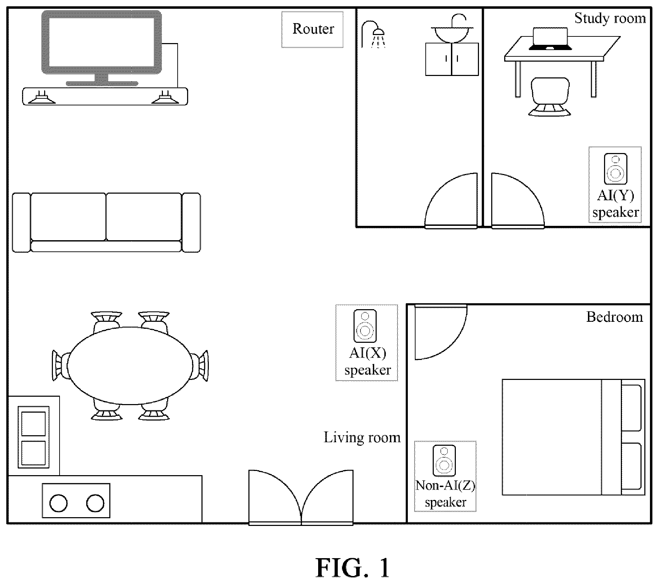

FIG. 1 is a schematic diagram illustrating a scenario of a plurality of speakers in a home scenario according to an embodiment of the present disclosure.

As shown in FIG. 1, in the home scenario, an AI(X) speaker in a living room is integrated with an SDK of AI X, an AI(Y) speaker in a study room is integrated with an SDK of AI Y, a non-AI(Z) speaker in a bedroom is integrated with no any AI SDK, and each of the speakers has a microphone.

Therefore, based on the data processing method of the present disclosure, microphone data can be transferred to each speaker through a connection to a home network (e.g., using a router), and an AI speaker can further transfer AI audio data to each speaker, enabling each speaker to support a plurality of AI functionalities. In this way, the non-AI(Z) speaker in the bedroom can support functionalities of AI X and AI Y, and AI(X) and AI(Y) can also use AI functionalities of each other.

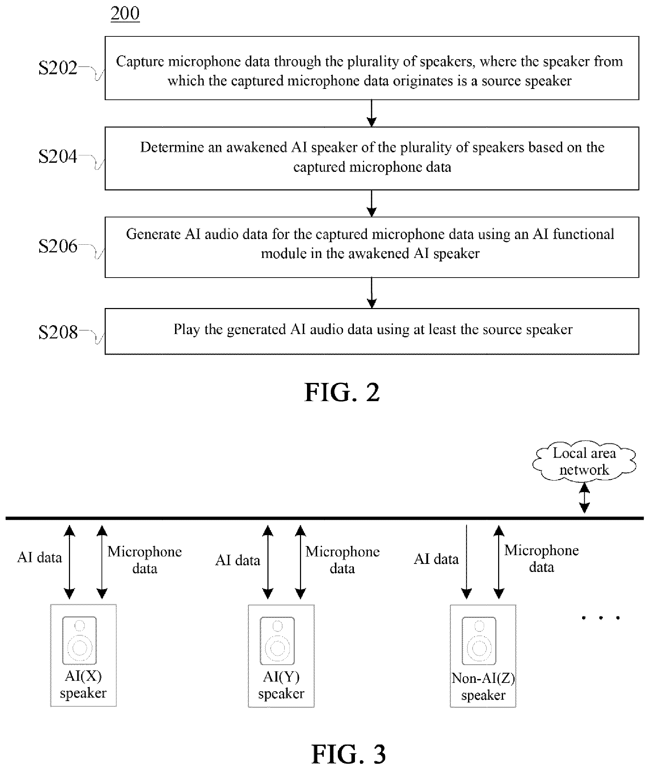

The data processing method of the present disclosure will be described in detail below with reference to FIG. 2 to FIG. 8.

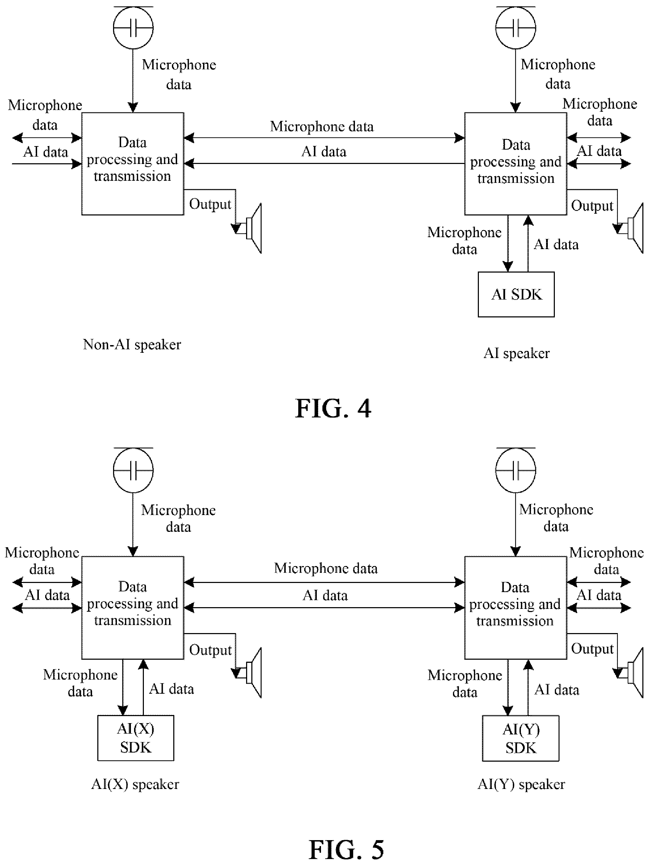

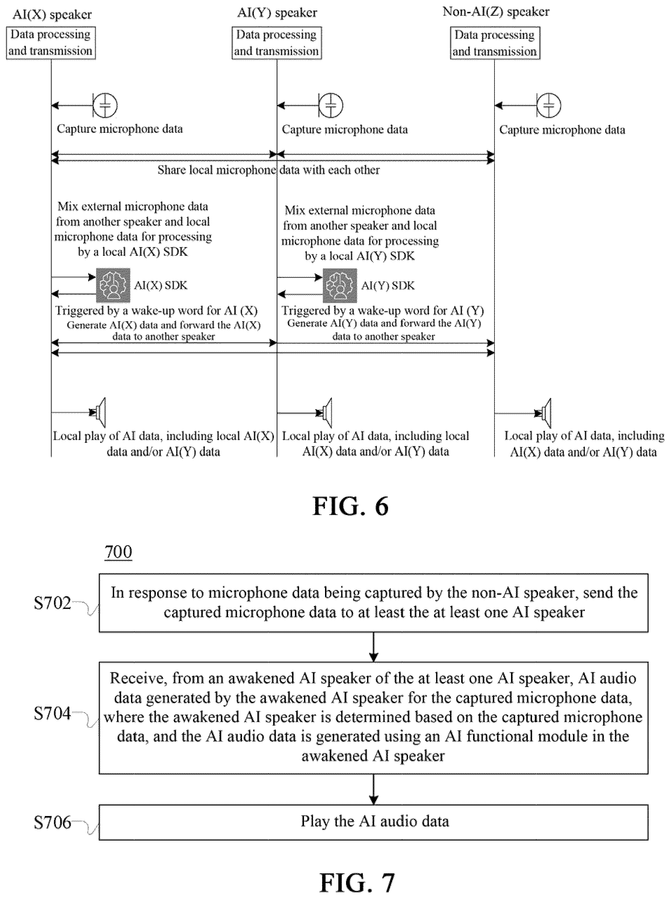

FIG. 2 is a flowchart illustrating a data processing method 200 according to an embodiment of the present disclosure. FIG. 3 is a schematic diagram illustrating data sharing between a plurality of speakers according to an embodiment of the present disclosure. FIG. 4 is a schematic diagram illustrating data sharing between a non-AI speaker and an AI speaker according to an embodiment of the present disclosure. FIG. 5 is a schematic diagram illustrating data sharing between AI speakers according to an embodiment of the present disclosure. FIG. 6 is a schematic flowchart illustrating a data processing method according to an embodiment of the present disclosure.

As described above, the data processing method of the present disclosure can be used for a plurality of speakers connected to each other, where the plurality of speakers may include at least one artificial intelligence (AI) speaker integrated with an AI functional module and having a microphone and at least one non-AI speaker integrated with no AI functional module and having a microphone. These speakers may include AI speakers of different brands and functionalities, i.e., AI speakers integrated with different AI functional modules (such as an AI SDK), and may further include a non-AI speaker integrated with no any AI functional module.

Optionally, a data connection may be established between the plurality of speakers, to perform data sharing through the data connection. According to this embodiment of the present disclosure, the plurality of speakers may be connected to each other through a local area network. As an example, the data connection between the plurality of speakers in the present disclosure may be a local area network connection, i.e., data sharing between the speakers may be implemented through the local area network. As shown in FIG. 3, sharing of microphone data and AI data between the speakers in FIG. 1 may be implemented through the local area network, where a non-AI speaker (e.g., non-AI(Z) speaker) may receive AI data from another AI speaker through the local area network for play. Of course, it should be understood that only the local area network connection between the speakers is described as an example in the present disclosure, while the data processing method of the present disclosure is also applicable to other types of data connection, such as a Bluetooth connection, thereby extending its versatility on different communication protocols.

As shown in FIG. 2, in step S202, microphone data may be captured through the plurality of speakers, where the speaker from which the captured microphone data originates is a source speaker.

Optionally, each of the plurality of speakers may collect microphone data in real time and share the collected microphone data with another speaker. The speaker collecting the microphone data may serve as the source speaker and send the microphone data collected by it to another speaker.

According to this embodiment of the present disclosure, capturing the microphone data through the plurality of speakers may include: for each non-AI speaker of the plurality of speakers, capturing, by the non-AI speaker, local microphone data through a microphone, and sending the captured local microphone data to at least the at least one AI speaker, where the non-AI speaker is the source speaker; and for each AI speaker of the plurality of speakers, capturing, by the AI speaker, local microphone data through a microphone, and/or receiving external microphone data from another speaker of the plurality of speakers, and using the captured local microphone data and/or the received external microphone data as data to be recognized for the AI speaker.

In this embodiment of the present disclosure, considering that the AI speaker and the non-AI speaker have different functionalities, they thus refer to different data processing processes respectively. For example, FIG. 4 is a schematic diagram illustrating data sharing between the non-AI speaker and the AI speaker, and FIG. 5 is a schematic diagram illustrating data sharing between the AI speakers. For example, each of the non-AI speaker and the AI speaker may include a data processing and transmission assembly for sharing microphone data and AI data, and based on this, the AI speaker may be further integrated with an AI SDK for implementing a corresponding AI functionality.

As shown in FIG. 4 and FIG. 5, the data processing and transmission assembly has varying processing logic for a speaker integrated with no AI SDK (non-AI speaker) and a speaker integrated with an AI SDK (AI speaker).

Optionally, the data processing and transmission assembly of the non-AI speaker may capture the local microphone data and forward the local microphone data to another speaker, in which case the non-AI speaker serves as the source speaker of the plurality of speakers. The another speaker includes at least the AI speaker of the plurality of speakers. In addition, as an example, the another speaker may also include another non-AI speaker, i.e., the non-AI speaker may receive microphone data from another speaker. As shown in FIG. 4, a microphone data transmission between the AI speaker and the non-AI speaker may be bidirectional or may be a unidirectional transmission from the non-AI speaker to the AI speaker, which is not limited in the present disclosure.

Optionally, the data processing and transmission assembly of the AI speaker may capture the local microphone data, in which case the AI speaker serves as the source speaker of the plurality of speakers, and may also receive microphone data from another speaker (source speaker) and use the microphone data together with the local microphone data as data to be recognized for processing by the local AI SDK. The other speakers may include another AI speaker and the non-AI speaker of the plurality of speakers, as shown in FIG. 5.

As an example, the AI speaker may mix (e.g., audio-overlay) its local microphone data with the external microphone data received from another source speaker, and use mixed data as data to be recognized thereof for processing by its local AI SDK. Of course, the AI speaker may also process the local microphone data and the external microphone data in another way, which is not limited in the present disclosure.

According to this embodiment of the present disclosure, capturing the microphone data through the plurality of speakers may further include: for each AI speaker of the plurality of speakers, sending the local microphone data captured by the AI speaker through the microphone to at least another AI speaker of the at least one AI speaker, where the AI speaker is the source speaker.

Optionally, when the microphone data is captured by the AI speaker, the AI speaker may also serve as the source speaker to forward the captured microphone data to another speaker, where the another speaker may include at least another AI speaker of the plurality of speakers. In addition, the another speaker may also include another non-AI speaker, which is not limited in the preset disclosure. As shown in FIG. 5, both the microphone data transmission and AI data transmission between the AI speakers connected to each other, e.g., the AI(X) speaker and the AI(Y) speaker, may be bidirectional.

As shown in FIG. 6, for the scenario of a plurality of speakers including the AI(X) speaker, the AI(Y) speaker, and the non-AI(Z) speaker, data processing and transmission assemblies of all the speakers can capture microphone data in real time and share the microphone data with each other. Through data sharing of the microphone data, the AI speaker can obtain microphone data collected by any of the plurality of speakers and use the microphone data together with the local microphone data as data to be recognized for processing by the local AI SDK, e.g., mixing the external microphone data from another speaker and the local microphone data for processing by the local AI SDK. When the local AI SDK generates AI data based on the microphone data, the AI speaker may share the AI data with another speaker of the plurality of speakers.

In step S204, an awakened AI speaker of the plurality of speakers may be determined based on the captured microphone data.

The AI functional module (AI SDK) of the AI speaker generally may be in a standby state and can perform data processing in response to awakening, where the awakening of the AI SDK generally can be implemented through activation by a wake-up word. That is, these AI speakers may be awakened in response to a specific wake-up word to start executing the AI functionality.

According to this embodiment of the present disclosure, determining the awakened AI speaker of the plurality of speakers based on the captured microphone data may include: for each AI speaker of the plurality of speakers, determining, through speech recognition based on the data to be recognized for the AI speaker, whether the AI speaker is awakened.

As for different AI speakers, e.g., AI speakers of different brands and functionalities, these AI speakers generally may correspond to different wake-up words, i.e., be awakened in response to different wake-up words. For example, a wake-up word for an AI speaker of Amazon is "Alexa", a wake-up word for an AI speaker integrated with Google Assistant is "Ok Google", and the like.

Therefore, in this embodiment of the present disclosure, an attempt to awake each AI speaker of a plurality of speakers sharing microphone data may be made based on the same microphone data, to perform a corresponding AI functionality using the awakened target AI speaker.

According to this embodiment of the present disclosure, determining, through speech recognition based on the data to be recognized for the AI speaker, whether the AI speaker is awakened may include: determining, through speech recognition, whether there is a wake-up word corresponding to the AI speaker in the data to be recognized; and when it is determined that there is a wake-up word corresponding to the AI speaker in the data to be recognized, determining that the AI speaker is awakened.

Optionally, whether there is a wake-up word that can wake up an AI SDK in data to be recognized for different AI speakers may be determined through speech recognition. Specifically, whether the data to be recognized contains a wake-up word corresponding to the target AI speaker may be analyzed, and when it is confirmed that the wake-up word exists in the data to be recognized, it may be determined that the AI speaker is awakened.

As shown in FIG. 6, different AI speakers may correspond to different wake-up words, i.e., an AI SDK of each AI speaker may be triggered by a wake-up word corresponding to the AI speaker, and then processing of data to be recognized for the AI speaker may be started.

In step S206, AI audio data may be generated for the captured microphone data using an AI functional module in the awakened AI speaker.

Optionally, after the awakened AI speaker is determined, the data to be recognized for the awakened AI speaker may be processed using the AI functional module in the awakened AI speaker, to generate the AI audio data corresponding to the captured microphone data.

As shown in FIG. 6, an AI(X) SDK of the AI(X) speaker may be triggered by a wake-up word for the AI (X), and then AI(X) data is generated and forwarded to the another speaker. Similarly, an AI(Y) SDK of the AI(Y) speaker may be triggered by a wake-up word for the AI (Y), and then AI(Y) data is generated and forwarded to the another speaker. That is, optionally, the data processing and transmission assembly of the AI speaker may receive AI data (i.e., AI audio data) from the local AI SDK and forward the AI data to another speaker.

Optionally, the data processing and transmission assembly of the non-AI speaker may receive AI data sent from another AI speaker for local output (e.g., play by the speaker). As shown in FIG. 6, an AI data transmission between the AI speaker and the non-AI speaker may be a unidirectional transmission from the AI speaker to the non-AI speaker, to implement sharing of an AI functionality by sharing the AI data.

In step S208, the generated AI audio data may be played using at least the source speaker.

According to this embodiment of the present disclosure, playing the generated AI audio data using at least the source speaker may include at least one of the following: when the awakened AI speaker is the source speaker, playing the generated AI audio data using the awakened AI speaker; when the awakened AI speaker is the source speaker, broadcasting, by the awakened AI speaker, the AI audio data to each of the plurality of speakers for play by each of the plurality of speakers; when the awakened AI speaker is not the source speaker, sending, by the awakened AI speaker, the generated AI audio data to the source speaker for play by the source speaker; or when the awakened AI speaker is not the source speaker, broadcasting, by the awakened AI speaker, the AI audio data to each of the plurality of speakers for play by each of the plurality of speakers.

This embodiment of the present disclosure provides several implementations of playing the AI audio data, to ensure that the generated AI audio data can reach a user in various forms.

Optionally, when the awakened AI speaker is exactly the source speaker, the generated audio data may be played directly using the AI speaker. Such a way can ensure audio timeliness and accuracy.

Optionally, in some cases, although the awakened AI speaker is the source speaker, the functionality thereof may not be limited to play, and it can also broadcast the generated AI audio data to a plurality of speakers, thereby implementing multipoint play, which enhances auditory experience of the user.

Optionally, when the awakened AI speaker is not the source speaker, the awakened AI speaker may send the generated AI audio data to the source speaker for play, to ensure that the source speaker can satisfy a customized demand of the user.

Optionally, when the awakened AI speaker is not the source speaker, the AI speaker may broadcast the audio data to a plurality of speakers, and each speaker may play the audio data independently, thereby providing the user with richer and diversified audio experience.

As shown in FIG. 6, for play of AI data, the AI speaker may play the AI audio data locally generated by the AI speaker (when the AI(X) speaker is awakened and generates the corresponding AI audio data) (e.g., the AI(X) data), and when another AI speaker (e.g., the AI(Y) speaker) is awakened and generates corresponding AI audio data, the AI speaker may also play the AI audio data, e.g., the AI(Y) data, from the another AI speaker. The non-AI speaker, when another AI speaker is awakened and generates corresponding AI audio data, may also play the AI audio data, e.g., the AI(X) data and/or the AI(Y) data, from the another AI speaker. The above operation not only can improve the user experience, but also can enhance the flexibility and adaptability of an audio system composed of a plurality of speakers.

As an example, as shown in FIG. 1, the AI(X) speaker in the living room may be integrated with Google Assistant, the AI(Y) speaker in the study room may be the AI speaker of Amazon, and the non-AI(Z) speaker in the bedroom is a non-AI speaker. Therefore, with the data processing method of the present disclosure, the following user interactions can be implemented:
(1) In the bedroom, the user may activate the speaker in the living room or study room by uttering "Ok Google" or "Alexa", for example, the captured microphone data may include "Ok Google, what time is it?" or "Alexa, what's the weather like today?". Accordingly, a speaker integrated with a corresponding AI SDK may process the data and share the generated AI audio data with a non-AI speaker in the bedroom, to reply to the user in the bedroom.
(2) In the study room, the user may awake the AI(Y) speaker using an "Alexa" command, or may awake the AI(X) speaker integrated with Google Assistant in the living room using an "Ok Google" command.
(3) Similarly, in the living room, the user may awake the AI(X) speaker with Google Assistant using the "Ok Google" command, or may awake the AI(Y) speaker in the study room using the "Alexa" command.

By sharing microphone data and AI audio data, any of the plurality of speakers can support both Google Assistant and the AI functionality of Amazon, thereby providing the user with a seamless interaction functionality across different rooms.

On that basis, both the AI speaker and the non-AI speaker of the plurality of speakers can enhance the user experience by supporting an integrated AI functionality within the local area network. Such the integrated AI functionality of a speaker shared with another speaker reduces hardware and software development costs of a speaker system, and can be easily implemented across various platforms and systems, thereby presenting robust extensibility. In addition, the integrated AI functionality of the present disclosure can be seamlessly extended to devices such as a mobile phone, a tablet computer, a desktop computer, and a laptop computer.

Therefore, with the data processing method of the present disclosure, microphone data is shared between a plurality of speakers by using a data connection between the plurality of speakers, to determine an awakened AI speaker of the plurality of speakers based on the shared microphone data, then AI audio data is generated for the captured microphone data by using an AI functional module in the awakened AI speaker, and the generated AI audio data is shared to at least part of the plurality of speakers, thereby implementing sharing of an AI speaker functionality between a plurality of speaker devices. With the data processing method of the present disclosure, by implementing sharing of an AI speaker functionality between the plurality of speaker devices, each speaker is enabled to support more AI functionalities than its original configuration, and even a speaker configured with no any AI functionality can still support all AI functionalities of all of the plurality of speakers.

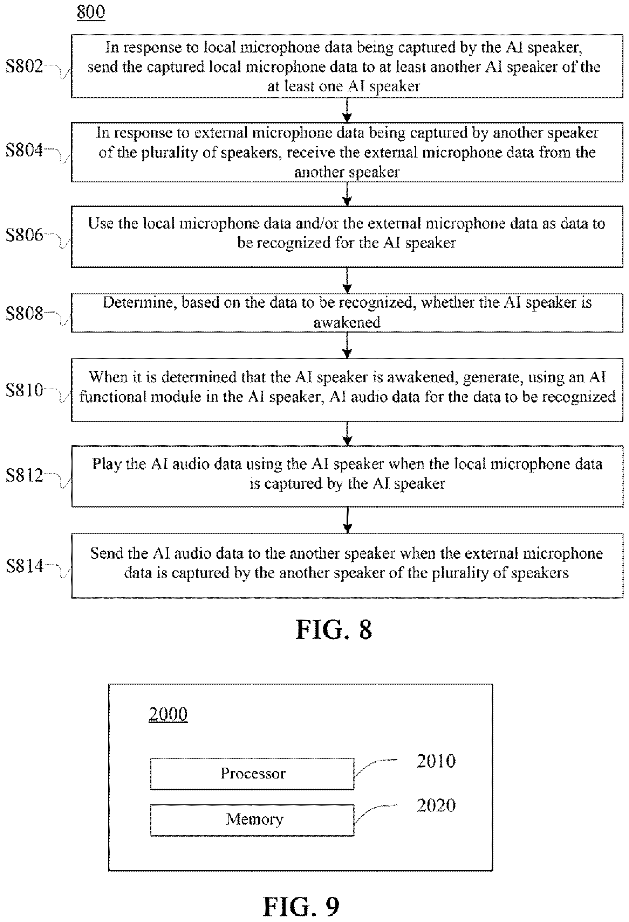

FIG. 7 is a flowchart illustrating a data processing method 700 according to an embodiment of the present disclosure. FIG. 8 is a flowchart illustrating a data processing method 800 according to an embodiment of the present disclosure. FIG. 7 may be applicable to a non-AI speaker integrated with no AI functional module and having a microphone in a speaker system, and FIG. 8 may be applicable to an AI speaker integrated with an AI functional module and having a microphone in the speaker system, where the speaker system may include a plurality of speakers connected to each other as described above, and the plurality of speakers include at least one AI speaker and at least one non-AI speaker. Specifically, FIG. 7 and FIG. 8 describes operations of the non-AI speaker and the AI speaker of the plurality of speakers described above during the data processing shown in FIG. 6, respectively.

When the data processing method of the present disclosure is performed using the plurality of speakers, as shown in FIG. 7, in step S702, the non-AI speaker may send captured microphone data to at least the at least one AI speaker in response to the microphone data being captured by the non-AI speaker, and in step S704, the non-AI speaker may receive, from an awakened AI speaker of the at least one AI speaker, AI audio data generated by the awakened AI speaker for the captured microphone data, where the awakened AI speaker may be determined based on the captured microphone data, and the AI audio data may be generated using an AI functional module in the awakened AI speaker. Finally, in step S706, the non-AI speaker may play the AI audio data.

As described above, the non-AI speaker may capture the local microphone data and forward the local microphone data to another speaker, in which case the non-AI speaker serves as the source speaker of the plurality of speakers. The another speaker includes at least the AI speaker of the plurality of speakers. In addition, as an example, the another speaker may also include another non-AI speaker, i.e., the non-AI speaker may receive microphone data from another speaker. As shown in FIG. 4, a microphone data transmission between the AI speaker and the non-AI speaker may be bidirectional or may be a unidirectional transmission from the non-AI speaker to the AI speaker, which is not limited in the present disclosure.

Further, the non-AI speaker may also receive AI data sent from another AI speaker for local output (e.g., play by the speaker). As shown in FIG. 6, an AI data transmission between the AI speaker and the non-AI speaker may be a unidirectional transmission from the AI speaker to the non-AI speaker, to implement sharing of an AI functionality by sharing the AI data.

Therefore, with the method 700, a speaker integrated with no AI SDK can access an AI functionality of another speaker through a data connection, thereby extending applications such as intelligent control and a voice assistant.

When the data processing method of the present disclosure is performed using the plurality of speakers, as shown in FIG. 8, in step S802, the AI speaker may send captured local microphone data to at least another AI speaker of the at least one AI speaker in response to the local microphone data being captured by the AI speaker, and in step S804, the AI speaker may receive, in response to external microphone data being captured by another speaker of the plurality of speakers, the external microphone data from the another speaker. On that basis, in step S806, the local microphone data and/or the external microphone data may be used as data to be recognized for the AI speaker.

Optionally, the AI speaker may capture the local microphone data, in which case the AI speaker serves as the source speaker of the plurality of speakers, and may also receive microphone data from another speaker (source speaker) and use the microphone data together with the local microphone data as data to be recognized for processing by the local AI SDK. The other speakers may include another AI speaker and the non-AI speaker of the plurality of speakers, as shown in FIG. 5.

Optionally, when the microphone data is captured by the AI speaker, the AI speaker may also serve as the source speaker to forward the captured microphone data to another speaker, where the another speaker may include at least another AI speaker of the plurality of speakers. In addition, the another speaker may also include another non-AI speaker, which is not limited in the preset disclosure. As shown in FIG. 5, both the microphone data transmission and AI data transmission between the AI speakers connected to each other, e.g., the AI(X) speaker and the AI(Y) speaker, may be bidirectional.

On that basis, the data to be recognized for the AI speaker may include one or more of the local microphone data captured by the AI speaker and the external microphone data received from another AI speaker.

Next, in step S808, whether the AI speaker is awakened may be determined based on the data to be recognized. In step S810, when it is determined that the AI speaker is awakened, AI audio data may be generated, using an AI functional module in the AI speaker, for the data to be recognized.

After the AI audio data is generated for the data to be recognized using the AI functional module in the AI speaker, the AI audio data may be played at the source speaker of the plurality of speakers where the microphone data is captured. Specifically, in step S812, the AI audio data may be played using the AI speaker when the local microphone data is captured by the AI speaker. In step S814, the AI audio data may be sent to the another speaker when the external microphone data is captured by the another speaker of the plurality of speaker.

In addition, the method 800 may further include: receiving, from an awakened AI speaker of the other AI speakers, AI audio data generated by the awakened AI speaker; and playing the received AI audio data using the AI speaker.

Optionally, the AI speaker may play the AI audio data locally generated by the AI speaker (when the AI(X) speaker is awakened and generates the corresponding AI audio data) (e.g., the AI(X) data), and when another AI speaker (e.g., the AI(Y) speaker) is awakened and generates corresponding AI audio data, the AI speaker may also play the AI audio data, e.g., the AI(Y) data, from the another AI speaker.

Therefore, with the method 800, data sharing can integrate a plurality of functionalities of speakers each integrated with a specific AI SDK in the same network, greatly improving the flexibility and convenience of use.

According to an aspect of the present disclosure, a data processing apparatus is provided. The data processing apparatus may be used for a non-AI speaker integrated with no AI functional module and having a microphone in a speaker system, where the speaker system may include a plurality of speakers connected to each other, the plurality of speakers include at least one AI speaker integrated with an AI functional module and having a microphone and at least one non-AI speaker, and the apparatus may include one or more modules for implementing the above method for a non-AI speaker in a speaker system. Optionally, these modules can perform the operations described above with reference to the method 700, which is no longer repeated herein in the present disclosure.

According to another aspect of the present disclosure, another data processing apparatus is provided. The data processing apparatus may be used for an AI speaker integrated with an AI functional module and having a microphone in a speaker system, where the speaker system may include a plurality of speakers connected to each other, the plurality of speakers include at least one AI speaker and at least one non-AI speaker integrated with no AI functional module and having a microphone, and the apparatus may include one or more modules for implementing the above method for an AI speaker in a speaker system. Optionally, these modules can perform the operations described above with reference to the method 800, which is no longer repeated herein in the present disclosure.

According to still another aspect of the present disclosure, a data processing device is further provided. FIG. 9 illustrates a schematic diagram of a data processing device 2000 according to an embodiment of the present disclosure.

As shown in FIG. 9, the data processing device 2000 may include at least one processor 2010 and at least one memory 2020. The memory 2020 has stored therein computer-readable code that, when run by the at least one processor 2010, can cause the above data processing method to be performed.

The processor in the embodiments of the present disclosure may be an integrated circuit chip having a signal processing capability. The aforementioned processor may be a general-purpose processor, a digital signal processor (DSP), an application-specific integrated circuit (ASIC), a field-programmable gate array (FPGA), or other programmable logic devices, discrete gates or transistor logic devices, or discrete hardware assemblies. It can implement or execute the methods, steps, and logic block diagrams disclosed in the embodiments of the present application. The general-purpose processor may be a microprocessor or the processor may also be any conventional processor, or the like, which may be based on an X86 architecture or an ARM architecture.

In general, various example embodiments of the present disclosure may be implemented in hardware or special purpose circuit, software, firmware, logic, or any combination thereof. Some aspects may be implemented in hardware, while other aspects may be implemented in firmware or software which may be executed by a controller, microprocessor, or other computing devices. When aspects of the embodiments of the present disclosure are illustrated or described as a block diagram, a flowchart, or using some other graphical representations, it will be understood that the blocks, apparatuses, systems, techniques, or methods described herein may be implemented as non-limiting examples in hardware, software, firmware, a special purpose circuit or logic, general purpose hardware or controller or other computing devices, or some combinations thereof.

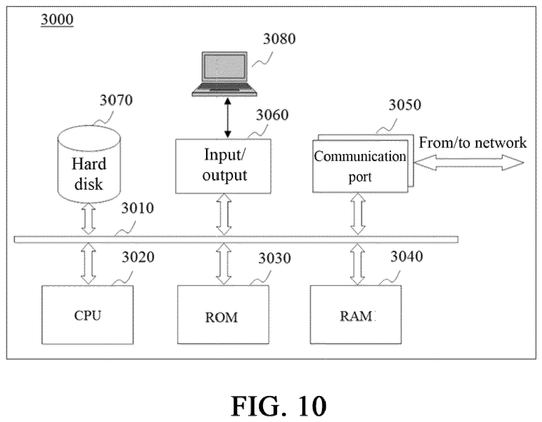

For example, the methods or apparatuses according to the embodiments of the present disclosure may also be implemented by means of the architecture of the computing device 3000 shown in FIG. 10. As shown in FIG. 10, the computing device 3000 may include a bus 3010, at least one CPU 3020, a read-only memory (ROM) 3030, a random access memory (RAM) 3040, a communication port 3050 connected to a network, an input/output assembly 3060, a hard disk 3070, and the like. A storage device in the computing device 3000, such as the ROM 3030 or the hard disk 3070, can store various data or files used for processing and/or communication of the data processing method provided in the present disclosure and program instructions executed by the CPU. The computing device 3000 may further include a user interface 3080. Of course, the architecture shown in FIG. 10 is merely an example, and during implementations of different devices, at least one assembly in the computing device shown in FIG. 10 may be omitted according to actual needs.

According to still another aspect of the present disclosure, a computer-readable storage medium is further provided. The computer storage medium has computer-readable instructions stored thereon. The computer-readable instructions, when executed by a processor, may cause the data processing method according to the embodiments of the present disclosure described with reference to the drawings above to be performed. The computer-readable storage medium in the embodiments of the present disclosure may be a volatile memory or a nonvolatile memory, or may include both a volatile memory and a nonvolatile memory. The nonvolatile memory may be a read-only memory (ROM), a programmable read-only memory (PROM), an erasable programmable read-only memory (EPROM), an electrically erasable programmable read-only memory (EEPROM), or a flash memory. The volatile memory may be a random access memory (RAM), which is used as an external cache. By way of example and not limitation, many forms of RAM are available, such as static random access memory (SRAM), dynamic random access memory (DRAM), synchronous dynamic random access memory (SDRAM), double data rate synchronous dynamic random access memory (DDRSDRAM), enhanced synchronous dynamic random access memory (ESDRAM), synchronous linked dynamic random access memory (SLDRAM), and direct memory bus random access memory (DR RAM). It should be noted that memory of the methods described herein is intended to include, but is not limited to, these and any other suitable types of memory. It should be noted that memory of the methods described herein is intended to include, but is not limited to, these and any other suitable types of memory.

An embodiment of the present disclosure further provides a computer program product or computer program including computer instructions stored in a computer-readable storage medium. A processor of a computer device reads the computer instructions from the computer-readable storage medium, and the processor executes the computer instructions to cause the computer device to execute the data processing method according to the embodiments of the present disclosure.

Embodiments of the present disclosure provide a data processing method, apparatus, and device, a computer program product, and a computer-readable storage medium.

With the method provided by the embodiments of the present disclosure, microphone data is shared between a plurality of speakers by using a data connection between the plurality of speakers, to determine an awakened AI speaker of the plurality of speakers based on the shared microphone data, then AI audio data is generated for the captured microphone data by using an AI functional module in the awakened AI speaker, and the generated AI audio data is shared to at least part of the plurality of speakers, thereby implementing sharing of an AI speaker functionality between a plurality of speaker devices. With the method of the embodiments of the present disclosure, by implementing sharing of an AI speaker functionality between the plurality of speaker devices, each speaker is enabled to support more AI functionalities than its original configuration, and even a speaker configured with no any AI functionality can still support all AI functionalities of all of the plurality of speakers.

It should be noted that the flowcharts and block diagrams in the drawings illustrate possibly implementable architectures, functions, and operations of systems, methods, and computer program products according to various embodiments of the present disclosure. In this regard, each block in the flowcharts or block diagrams may represent a module, a program segment, or a portion of code, which contains at least one executable instruction for implementing a specified logical function. It should also be noted that, in some alternative implementations, the functions noted in the blocks may occur in an order other than that noted in the drawings. For example, two blocks shown in succession may actually be executed substantially in parallel, or they may sometimes be executed in the reverse order, depending on the functionality involved. It should be further noted that each block in the block diagrams and/or flowcharts and a combination of blocks in the block diagrams and/or flowcharts may be implemented by using a dedicated hardware-based system used for executing specified functions or operations, or may be implemented by using a combination of dedicated hardware and a computer instruction.

In general, various example embodiments of the present disclosure may be implemented in hardware or special purpose circuit, software, firmware, logic, or any combination thereof. Some aspects may be implemented in hardware, while other aspects may be implemented in firmware or software which may be executed by a controller, microprocessor, or other computing devices. When aspects of the embodiments of the present disclosure are illustrated or described as a block diagram, a flowchart, or using some other graphical representations, it will be understood that the blocks, apparatuses, systems, techniques, or methods described herein may be implemented as non-limiting examples in hardware, software, firmware, a special purpose circuit or logic, general purpose hardware or controller or other computing devices, or some combinations thereof.

The example embodiments of the present disclosure described in detail above are illustrative only and not restrictive. Those skilled in the art should understand that various modifications and combinations may be made to these embodiments or features thereof without departing from the principles and spirit of the present disclosure, and such modifications should fall within the scope of the present disclosure.

## Claims

1. A data processing method for a plurality of speakers connected to each other, the plurality of speakers comprising at least one artificial intelligence (AI) speaker integrated with an AI functional module and having a microphone and at least one non-AI speaker integrated with no AI functional module and having a microphone, and the method comprising:
capturing microphone data through the plurality of speakers, wherein the speaker from which the captured microphone data originates is a source speaker;
determining an awakened AI speaker of the plurality of speakers based on the captured microphone data;
generating AI audio data for the captured microphone data using an AI functional module in the awakened AI speaker; and
playing the generated AI audio data using at least the source speaker.

2. The method according to claim 1, wherein capturing the microphone data through the plurality of speakers comprises:
for each non-AI speaker of the plurality of speakers, capturing, by the non-AI speaker, local microphone data through a microphone, and sending the captured local microphone data to at least the at least one AI speaker, wherein the non-AI speaker is the source speaker; and
for each AI speaker of the plurality of speakers, capturing, by the AI speaker, local microphone data through a microphone, and/or receiving external microphone data from another speaker of the plurality of speakers, and using the captured local microphone data and/or the received external microphone data as data to be recognized for the AI speaker.

3. The method according to claim 2, wherein capturing the microphone data through the plurality of speakers further comprises:
for each AI speaker of the plurality of speakers, sending the local microphone data captured by the AI speaker through the microphone to at least another AI speaker of the at least one AI speaker, wherein the AI speaker is the source speaker.

4. The method according to claim 2, wherein determining the awakened AI speaker of the plurality of speakers based on the captured microphone data comprises:
for each AI speaker of the plurality of speakers, determining, through speech recognition based on the data to be recognized for the AI speaker, whether the AI speaker is awakened.

5. The method according to claim 4, wherein determining, through speech recognition based on the data to be recognized for the AI speaker, whether the AI speaker is awakened comprises:
determining, through speech recognition, whether there is a wake-up word corresponding to the AI speaker in the data to be recognized; and
when it is determined that there is a wake-up word corresponding to the AI speaker in the data to be recognized, determining that the AI speaker is awakened.

6. The method according to claim 1, wherein playing the generated AI audio data using at least the source speaker comprises at least one of the following:
when the awakened AI speaker is the source speaker, playing the generated AI audio data using the awakened AI speaker;
when the awakened AI speaker is the source speaker, broadcasting, by the awakened AI speaker, the AI audio data to each of the plurality of speakers for play by each of the plurality of speakers;
when the awakened AI speaker is not the source speaker, sending, by the awakened AI speaker, the generated AI audio data to the source speaker for play by the source speaker; or
when the awakened AI speaker is not the source speaker, broadcasting, by the awakened AI speaker, the AI audio data to each of the plurality of speakers for play by each of the plurality of speakers.

7. The method according to claim 1, wherein the plurality of speakers are connected to each other through a local area network.

8. A data processing method for a non-artificial intelligence (AI) speaker integrated with no AI functional module and having a microphone in a speaker system, wherein the speaker system comprises a plurality of speakers connected to each other, the plurality of speakers comprise at least one AI speaker integrated with an AI functional module and having a microphone and at least one non-AI speaker, the method is performed by one of the at least one non-AI speaker, and the method comprises:
in response to microphone data being captured by the non-AI speaker, sending the captured microphone data to at least the at least one AI speaker;
receiving, from an awakened AI speaker of the at least one AI speaker, AI audio data generated by the awakened AI speaker for the captured microphone data, wherein the awakened AI speaker is determined based on the captured microphone data, and the AI audio data is generated using an AI functional module in the awakened AI speaker; and
playing the AI audio data.

9. A data processing method for an artificial intelligence (AI) speaker integrated with an AI functional module and having a microphone in a speaker system, wherein the speaker system comprises a plurality of speakers connected to each other, the plurality of speakers comprise at least one AI speaker and at least one non-AI speaker integrated with no AI functional module and having a microphone, the method is performed by one of the at least one AI speaker, and the method comprises:
in response to local microphone data being captured by the AI speaker, sending the captured local microphone data to at least another AI speaker of the at least one AI speaker;
in response to external microphone data being captured by another speaker of the plurality of speakers, receiving the external microphone data from the another speaker;
using the local microphone data and/or the external microphone data as data to be recognized for the AI speaker;
determining, based on the data to be recognized, whether the AI speaker is awakened;
when it is determined that the AI speaker is awakened, generating, using an AI functional module in the AI speaker, AI audio data for the data to be recognized;
playing the AI audio data using the AI speaker when the local microphone data is captured by the AI speaker; and
sending the AI audio data to the another speaker when the external microphone data is captured by the another speaker of the plurality of speakers.

10. The method according to claim 9, further comprising:
receiving, from an awakened AI speaker of the other AI speakers, AI audio data generated by the awakened AI speaker; and
playing the received AI audio data using the AI speaker.

11. A data processing apparatus for a non-artificial intelligence (AI) speaker integrated with no AI functional module and having a microphone in a speaker system, wherein the speaker system comprises a plurality of speakers connected to each other, the plurality of speakers comprise at least one AI speaker integrated with an AI functional module and having a microphone and at least one non-AI speaker, and the apparatus comprises one or more modules for implementing the method according to claim 8.

12. A data processing apparatus for an artificial intelligence (AI) speaker integrated with an AI functional module and having a microphone in a speaker system, wherein the speaker system comprises a plurality of speakers connected to each other, the plurality of speakers comprise at least one AI speaker and at least one non-AI speaker integrated with no AI functional module and having a microphone, and the apparatus comprises one or more modules for implementing the method according to claim 9 or 10.

13. A data processing device, comprising:
at least one processor; and
at least one memory having stored therein a computer-executable program that, when executed by the processor, causes the method according to any one of claims 1-10 to be performed.

14. A computer program product stored on a computer-readable storage medium and comprising computer instructions that, when run by a processor, cause a computer device to perform the method according to any one of claims 1-10.

15. A computer-readable storage medium having stored thereon computer-executable instructions that, when executed by a processor, cause the method according to any one of claims 1-10 to be implemented.
